# EUROPEAN PATENT APPLICATION

(11) **EP 3 862 959 A1**
(43) Date of publication of application: **11.08.2021**
(21) Application number: 21155045.4
(22) Date of filing: 03.02.2021
(51) Int. Cl.: G06Q 30/06, G06Q 20/20, G07G 1/00, G07G 1/01

(54) **PRODUCT CANDIDATE PRESENTATION SYSTEM AND PAYMENT-PROCESSING SYSTEM**

(30) Priority: 10.02.2020 JP 2020020503
(71) Applicant: ISHIDA CO., Ltd., Kyoto-shi, Kyoto 606-8392 (JP)
(72) Inventor: TSUTSUMI, Hironori, Ritto-shi, Shiga 520-3026 (JP); FUCHUYA, Kosuke, Ritto-shi, Shiga 520-3026 (JP)
(74) Representative: Global IP Europe Patentanwaltskanzlei

(57) **Abstract**

A product candidate presentation system (10) presents candidates of a product in order to allow a user to make a selection on the basis of a captured image of the product. The product candidate presentation system (10) comprises an acquisition part (13), an estimation part (14), a storage part (12), and a presentation part (15). The acquisition part (13) acquires an image of the product. The estimation part (14) estimates candidates of the product from a product group on the basis of the image. The storage part (12) stores products selected from the product group in the past as selection information. The presentation part (15) sorts candidates of the product estimated by the estimation part (14) as a first candidate group, sorts candidates of the product as a second candidate group on the basis of the selection information, and presents the first candidate group and the second candidate group.

## Description

### TECHNICAL FIELD

The present invention relates to a product candidate presentation system and a payment-processing system.

### BACKGROUND ART

In the prior art, systems that identify foodstuffs, etc., by image identification and reduce cashier work in a store have been disclosed, as in Patent Literature 1 (Japanese Patent No. 6177068). A store system in Patent Literature 1 identifies a type of a product by comparing a feature value extracted from an image of the product with a feature value in learning data. In the store system in Patent Literature 1, feature values of products having a high degree of reliability among feature values of products of which the type has been identified by the store system, and feature values of products of which the type identified by the store system has been manually corrected, are added to the learning data by a learning data management part.

### SUMMARY OF THE INVENTION

### <Technical Problem>

However, in the store system in Patent Literature 1, there are products that are difficult to identify from the image even after repeated learning, so it is not possible to reduce cashier work at the store for such products, and it is on this problem that the inventors have focused. Specifically, the inventors have focused on the problem that when the use of an identification result is considered, a suitable product selection based on the identification result is not possible and it still takes effort to select the product; this problem is made an object of the present invention.

Specifically, it is an object of the present invention to provide a product candidate presentation system and a payment-processing system that can reduce the effort needed to select a product.

### <Solution to Problem>

A product candidate presentation system according to a first aspect presents candidates of a product receives a selection of one of the candidates of the product on the basis of a captured image of the product. The product candidate presentation system comprises an acquisition part, an estimation part, a storage part, and a presentation part. The acquisition part acquires an image of the product. The estimation part estimates candidates of the product from a product group on the basis of the image. The storage part stores products selected from the product group in the past as selection information. The presentation part sorts candidates of the product estimated by the estimation part as a first candidate group, sorts candidates of the product as a second candidate group on the basis of the selection information, and presents the first candidate group and the second candidate group.

In the product candidate presentation system according to the first aspect, the presentation part can present the first candidate group, which is sorted on the basis of the image, and the second candidate group, which is sorted on the basis of products selected in the past. Therefore, the possibility of the correct product being included in the upper ranks can be made higher than when only the first candidate group chosen on the basis of the image is presented. Therefore, the product candidate presentation system according to the first aspect can reduce the effort needed to select a product.

In a product candidate presentation system according to a second aspect, the selection information is information pertaining to a number of corrections counted by associating the selection of each product as a correction action for products selected exclusive of the first candidate group among the products selected from the product group in the past.

In the product candidate presentation system according to the second aspect, for the selection information, products that were not selected from the first candidate group sorted on the basis of the image are counted as the number of corrections. Therefore, the selection information is associated with a correction action performed due to a product not being included in the first candidate group. Therefore, even if the product is not included in the first candidate group, the product will be included in the upper ranks of the second candidate group, and the possibility of the correct product being included in the upper ranks is thereby even higher.

In a product candidate presentation system according to a third aspect, the presentation part sorts the products in descending order of number of corrections serving as the correction action on the basis of the selection information.

In the product candidate presentation system according to the third aspect, products sorted in descending order of number of corrections can be presented as the second candidate group by the presentation part. Products not likely to be sorted as the first candidate group are thereby likely included in the upper ranks of the second candidate group.

In a product candidate presentation system according to a fourth aspect, the presentation part sorts the products in descending order of number of corrections with a total number being no greater than a predetermined number from the most recent correction or within a predetermined time period from the most recent correction.

In the product candidate presentation system according to the fourth aspect, the presentation part sorts products using the most recent numbers of corrections in the selection information. Therefore, the presentation part can present a second candidate group that reflects the actual situation.

In a product candidate presentation system according to a fifth aspect, the estimation part estimates candidates of the product in accordance with a learned model. The number of corrections is reset during an update of the learned model.

In the product candidate presentation system according to the fifth aspect, a count of the number of corrections can be started during an update of the learned model. Therefore, a second candidate group that reflects the actual situation can be presented because the selection information is created along with an update of the learned model.

In a product candidate presentation system according to a sixth aspect, the selection information is information pertaining to a number of selections counted by associating the selection of each product as a selection action for all selected products among the products selected from the product group in the past.

In the product candidate presentation system according to the sixth aspect, products sorted on the basis of the selection information, in which often selected products are aligned, can be presented as the second candidate group by the presentation part. Therefore, even if the correct product or a frequently selected product is not included in the first candidate group, such a product is included in the upper ranks of the second candidate group, whereby there is a higher possibility of such a product being included in the upper ranks.

In a product candidate presentation system according to a seventh aspect, the presentation part presents the second candidate group in addition to the first candidate group.

In the product candidate presentation system according to the seventh aspect, products can be presented in descending order of possibility (probability) of being the correct product. Therefore, the effort needed to select a product can be further reduced. In a product candidate presentation system according to an eighth aspect, the system further comprises a display part having a screen that displays the first candidate group and the second candidate group presented by the presentation part. The presentation part presents at least some of the first candidate group and at least some of the second candidate group on a first screen image of the display part.

In the product candidate presentation system according to the eighth aspect, the first candidate group and the second candidate group are displayed on the first screen image in the display part. The possibility (probability) of the correct product being included on the first screen image thereby increases, and the user can therefore be spared the effort of bringing up the next screen image.

In a product candidate presentation system according to a ninth aspect, the estimation part assigns rankings to the candidate products on the basis of a result estimated from the image in accordance with a learned model. The presentation part presents products up to a predetermined ranking in descending order of ranking as the first candidate group.

In the product candidate presentation system according to the ninth aspect, there is a high probability of the correct product being included in the upper ranks when the learned model is utilized to assign rankings and estimate product candidates from the image. Here, the presentation part presents upper-ranked estimation results in the estimation part in descending order of ranking as the first candidate group, and as the second candidate group, presents products selected in the past on the basis of the selection information. Therefore, the possibility of the correct product being included in the upper ranks is even higher.

A payment-processing system according to a tenth aspect comprises an imaging part, the product candidate presentation system, a selection part, a weighing part, and a calculation part. The imaging part captures an image of the product. The product candidate presentation system presents candidates of the product on the basis of the image of the product captured by the imaging part. The selection part is configured to receive a selection of one of the candidates presented by the product candidate presentation system. The weighing part weighs the product. The calculation part calculates a price of the product on the basis of the product selected using the selection part and the weight measured by the weighing part.

The payment-processing system according to the tenth aspect comprises the product candidate presentation system according to the first to ninth aspects, and the effort of selecting the product in the captured image can therefore be reduced. Therefore, a payment can be made efficiently.

### <Advantageous Effects of Invention>

With the product candidate presentation system and the payment-processing system according to the present invention, the effort needed to select a product can be reduced.

### BRIEF DESCRIPTION OF THE DRAWINGS

FIG. 1 is a schematic drawing of a payment-processing system according to an embodiment;
FIG. 2 is a block diagram of a price determination device of the payment-processing system;
FIG. 3 is an example of product candidates displayed on a display part;
FIG. 4 is an example of a product price displayed on the display part;
FIG. 5 is a block diagram of a product candidate presentation system of the embodiment;
FIG. 6 schematically represents a neural network of algorithms of a learning model; and
FIG. 7 is a flowchart of a payment process in the payment-processing system in the embodiment.

### DESCRIPTION OF EMBODIMENTS

A product candidate presentation system 10 and a payment-processing system 40 according to an embodiment of the present invention are described below. The description below is merely an embodiment of the product candidate presentation system and the payment-processing system of the present invention, and is not intended to limit the technical range of the present invention. It should be understood that various modifications can be made to the following embodiment without deviating from the scope and range of the present invention.

### (1) Overall summary

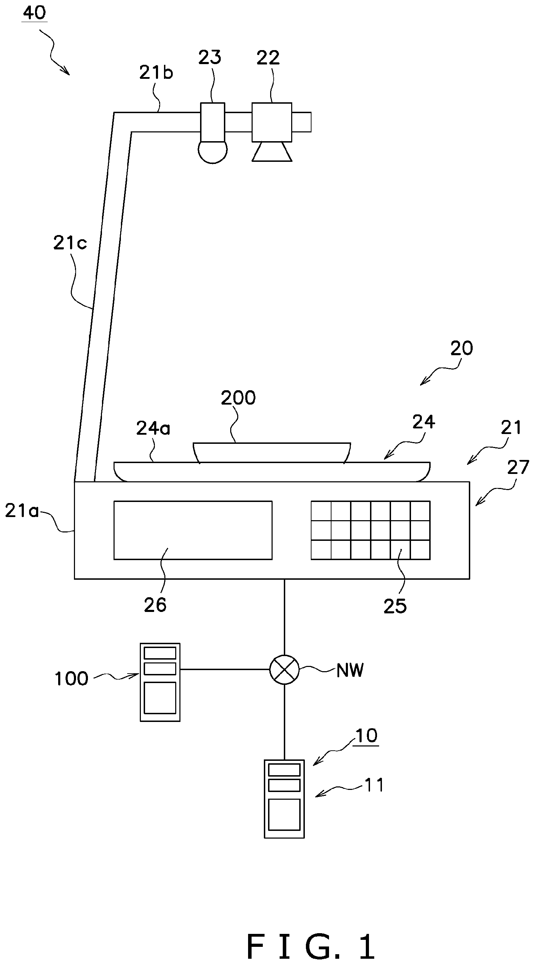

A summary of the product candidate presentation system 10 and the payment-processing system 40 shall be described with reference to FIG. 1. FIG. 1 schematically depicts the payment-processing system 40, which comprises the product candidate presentation system 10.

The payment-processing system 40 includes the product candidate presentation system 10 and a price determination device 20, as shown in FIG. 1. The product candidate presentation system 10 presents candidates of a product in order to allow a user to select a candidate, on the basis of a captured image of the product. In the payment-processing system 40, the price of the product selected by the user from among the candidates presented by the product candidate presentation system 10 is determined by the price determination device 20.

The product candidate presentation system 10 includes a control unit 11. The control unit 11 is communicably connected to the price determination device 20 via a network NW. The network NW may be a LAN, or the network NW may be the Internet or another WAN. In another embodiment, some or all of the functions of the control unit 11 may be incorporated into the price determination device 20. In yet another embodiment, some or all of the functions of the control unit 11 are incorporated into a cloud server. Specifically, some or all functional parts of the control unit 11 may be incorporated into a cloud server. There may be a plurality of cloud servers. Therefore, the functional parts of the control unit 11 may be dispersed among a plurality of cloud servers.

The control unit 11 may be communicably connected to a store computer 100 via the network NW. The store computer 100 is a computer that manages a variety of information pertaining to a product group being sold and/or provided in a store, etc., where the payment-processing system 40 is utilized. The variety of information pertaining to the product group includes a product master on which product-associated information relating to products is recorded for each product. The product master is a table in which, for example, product names, product numbers, unit prices, etc., are correlated.

Applications for the payment-processing system 40 are not given by way of limitation, but the system is utilized in, for example, a supermarket or another store. Products for which payment processing is performed by the payment-processing system 40 are, for example, prepared food and other various types of products 200. The products for which payment processing is performed by the payment-processing system 40 (candidate products presented by the product candidate presentation system 10) may be bread, vegetables, and other foodstuffs, or products other than foodstuffs.

### (2) Price determination device

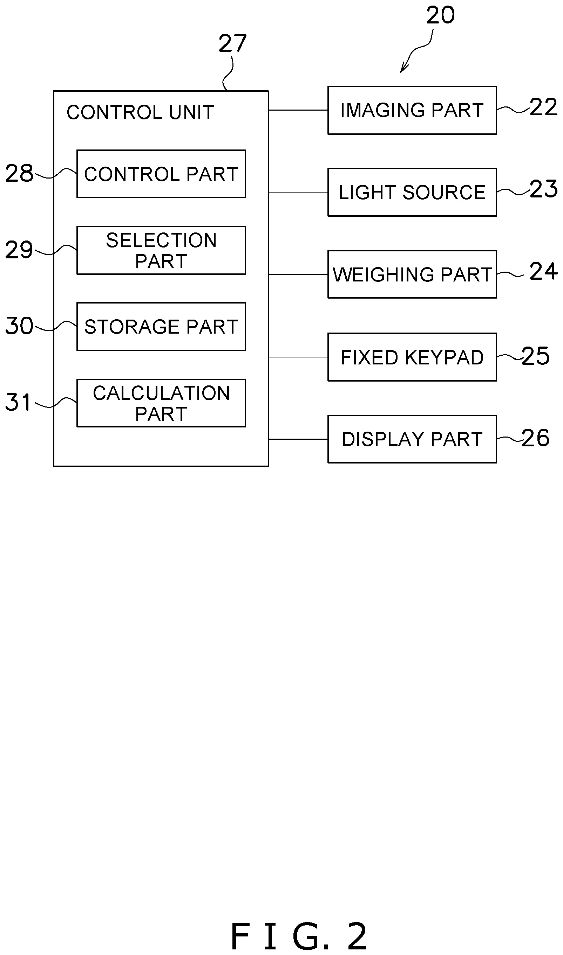

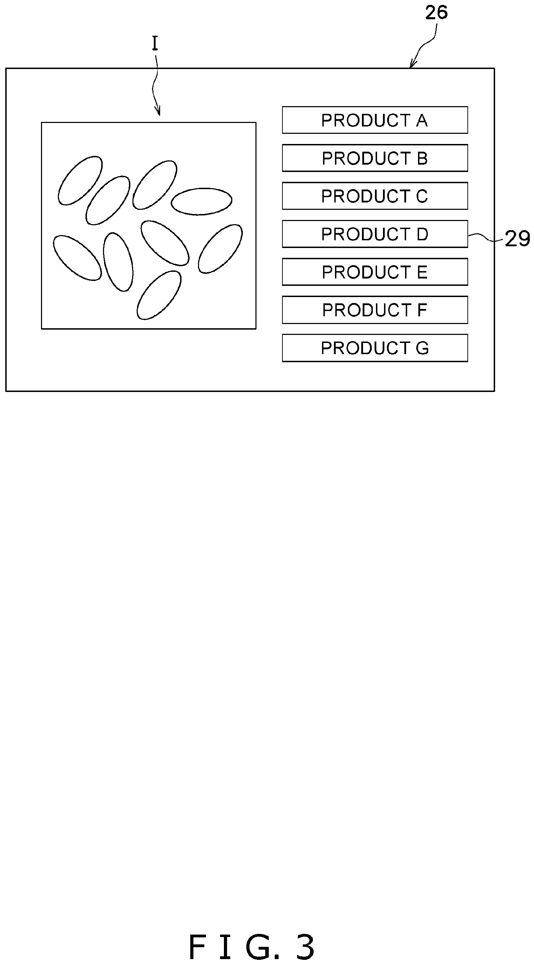

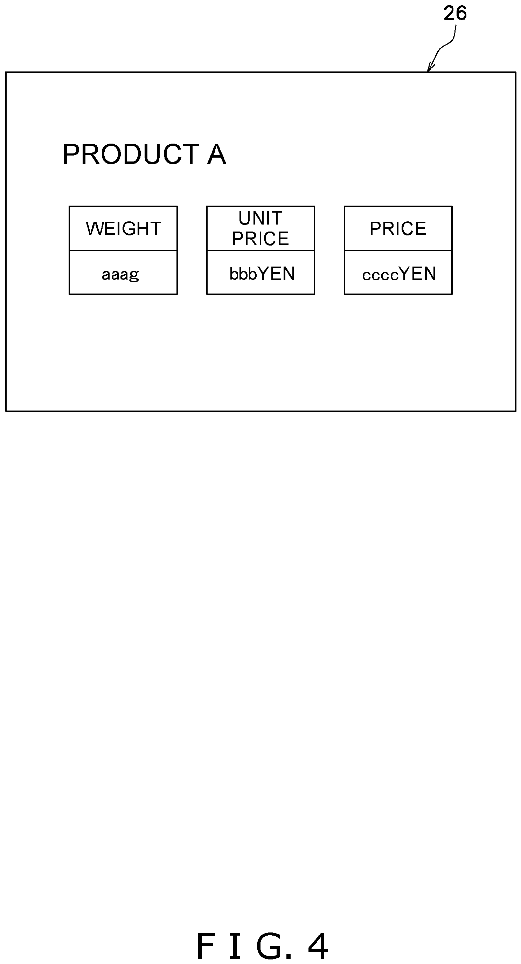

The price determination device 20 constituting the payment-processing system 40 shall be described with reference to FIGS. 1 to 4. FIG. 2 is a block diagram of the price determination device 20. FIG. 3 is an example of a display of candidates of a product presented by the product candidate presentation system 10 and displayed on a display part 26. FIG. 4 is an example of a display of product prices displayed on the display part 26.

The price determination device 20 is installed in a product salesroom, etc. The price determination device 20 is communicably connected to the store computer 100 and the control unit 11 of the product candidate presentation system 10 via the network NW. The price determination device 20 receives candidates of the product 200 placed on a weighing stand 24a from the control unit 11 via the network NW. The price determination device 20 (weighing part 24) has a function of weighing the product 200 placed on the weighing stand 24a. The price determination device 20 determines the price of the product 200 on the basis of the candidates of the product transmitted from the control unit 11, the unit price of the product acquired from the store computer 100, and the weight of the product 200 weighed by the weighing part 24.

The price determination device 20 is provided with a casing 21, an imaging part 22, a light source 23, the weighing part 24, a fixed keypad 25, the display part 26, and a control unit 27, as shown in FIG. 1. The control unit 27 includes a control part 28, a selection part 29, a storage part 30, and a calculation part 31, as shown in FIG. 2. The display part 26 includes the selection part 29.

### (2-1) Casing

The casing 21 includes an accommodating part 21a, a holding part 21b, and a linking part 21c, as shown in FIG. 1. The accommodating part 21a accommodates the weighing part 24. The holding part 21b is disposed above the accommodating part 21a. The linking part 21c links the accommodating part 21a and the holding part 21b together. The linking part 21c extends vertically.

### (2-2) Imaging part

The imaging part 22 shown in FIGS. 1 and 2 captures an image of the product 200. The imaging part 22 is provided to the holding part 21b. When the product 200 is placed on the weighing stand 24a, the imaging part 22 is controlled by the control part 28 of the control unit 27, described hereinafter, to capture an image of the product 200 and acquire an image I (see FIG. 3). The imaging part 22 is, for example, a CCD image sensor, a CMOS image sensor, etc., that acquires color images. The imaging part 22 may include a stereo camera, an infrared camera that acquires a temperature image of the product 200, etc. The imaging part 22 transmits the captured image I from the price determination device 20 to the control unit 11 of the product candidate presentation system 10 via the network NW.

The imaging part 22 may be a device independent from the price determination device 20, and the image I captured by the imaging part 22 may be transmitted to the control unit 11 using a communication device of the imaging part 22 and/or a gateway to which the imaging part 22 is connected.

### (2-3) Light source

The light source 23 illuminates the product 200 to be imaged by the imaging part 22. The light source 23 is provided to the holding part 21b. One or a plurality of light sources 23 are disposed in proximity to the imaging part 22.

### (2-4) Weighing part

The weighing part 24 weighs the product. The weighing part 24 is provided to the accommodating part 21a. The weighing part 24 includes the weighing stand 24a, a load cell (not shown), a signal processing circuit, and a transmission module. The product 200 is placed on the weighing stand 24a. The load cell is provided underneath the weighing stand 24a. The load cell converts mechanical strain occurring when the product 200 is placed on the weighing stand 24a to an electric signal. The signal processing circuit amplifies the signal outputted by the load cell and converts the signal to a digital signal, and the transmission module transmits the digital signal to the control unit 27.

### (2-5) Fixed keypad

The fixed keypad 25 has various keys needed to operate the price determination device 20. The fixed keypad is provided to the accommodating part 21a.

### (2-6) Display part

The display part 26 displays a variety of information. The display part 26 of the present embodiment is a touch panel display. The display part 26 may have one screen, and may have a plurality of screens. The display part 26 is provided to the accommodating part 21a.

The image I of the product 200 imaged by the imaging part 22 and a plurality of candidates of the product presented by the product candidate presentation system 10 on the basis of the image I are displayed on the display part 26, as shown in FIG. 3. In FIG. 3, the image I is displayed on the left side and the candidates of the product are displayed on the right side.

The display part 26 displays a product name that the user selects (by touching) using the selection part 29 from among the candidates of the product, a weight value of the product 200 weighed by the weighing part 24, a unit price of the product acquired from the store computer 100, and a price of the product 200 calculated by the calculation part 31, as shown in FIG. 4.

### (2-7) Control unit

The control unit 27 is provided to the accommodating part 21a, as shown in FIG. 1. The control unit 27 is realized by means of a computer. The control unit 27 is provided with a control computation device and a storage device. A processor, namely a CPU or a GPU, can be used for the control computation device. The control computation device reads out a program stored in the storage device and performs a predetermined image process and/or computation process in accordance with the program. Furthermore, in accordance with the program, the control computation device can write a computation result into the storage device and read out information stored in the storage device.

The control unit 27 is communicably connected to the control unit 11 and/or the store computer 100 via the network NW. The control unit 27 includes the control part 28, the selection part 29, the storage part 30, the calculation part 31, and an output part, as shown in FIG. 2.

### (2-7-1) Control part

Upon sensing that the product 200 has been placed on the weighing stand 24a of the weighing part 24 on the basis of the weight value of the weighing part 24, the control part 28 controls the imaging part 22 and causes the imaging part 22 to capture an image of the product 200 placed on the weighing stand 24a. The control part 28 may cause the imaging part 22 to capture an image of the product 200 placed on the weighing stand 24a when it has been sensed that there is a difference between a base image of the weighing stand 24a (an image captured with no product in frame) stored in advance in the storage part 30 and the currently captured image. Rather than controlling the imaging part 22 automatically, the control part 28 may cause the imaging part 22 to capture an image of the product 200 on the basis of an operation inputted from the fixed keypad 25, etc. Additionally, the control part 28 controls the display of the display part 26.

### (2-7-2) Selection part

The selection part 29 selects a product from among the candidates presented by the product candidate presentation system 10. The selection part 29 is included in the display part 26, as shown in FIG. 3. The user operates the selection part 29 of the display part 26, which is a touch panel display, to select the correct product from among the displayed product candidates.

In FIG. 3, the selection part 29 is selection buttons (areas displayed as being sectioned) listing products A through G. If the correct product is among the products A through G serving as a plurality of candidates displayed on the display part 26, the user can select the correct product by pressing, as the selection part 29, the selection button listing the correct product. The product selected using the selection part 29 is received, as an input, a product corresponding to the image I. Therefore, information pertaining to the product selected using the selection part 29 is transmitted to the calculation part. The result of the user's selection is transmitted from the price determination device 20 to the store computer 100 via the network NW.

The control unit 27 outputs, as teacher data, a combination of the image of the product 200 captured by the imaging part 22 and the information pertaining to the product (the correct product name assessed by a person) selected using the selection part 29. The outputted teacher data is inputted to the control unit 11 and stored in a teacher data storage area (not shown) of a storage part 12, described hereinafter. When a new learned model is generated (constructed), the control unit 11 causes a before-generation learning model to learn at least some of the originally existing teacher data and at least some of the newly stored teacher data. Specifically, the learned model is updated by learning the added teacher data as appropriate. Such learning is performed separately from the payment processing; for example, the learning is performed at the closing time of the store, etc.

### (2-7-3) Storage part

The storage part 30 stores information needed for the product master and/or product identification. The storage part 30 acquires the product master from the store computer 100. The product master includes a data table correlating at least a product number (ID), a product name, a unit price, a fixed amount, etc. The product master can be updated (changed).

### (2-7-4) Calculation part

The calculation part 31 calculates the price of the product on the basis of the product selected using the selection part 29 and the weight measured by the weighing part 24. Specifically, upon receiving the information pertaining to the product selected using the selection part 29, the calculation part 31 reads the information pertaining to the product out from the product master. In this embodiment, the calculation part 31 acquires the product unit price corresponding to the selected product from the product master. The calculation part 31 acquires the measured weight value from the weighing part 24. The calculation part 31 calculates the product price on the basis of the acquired weight value and the product unit price. The calculation part 31 transmits the calculated price to the display part 26.

### (3) Product candidate presentation system

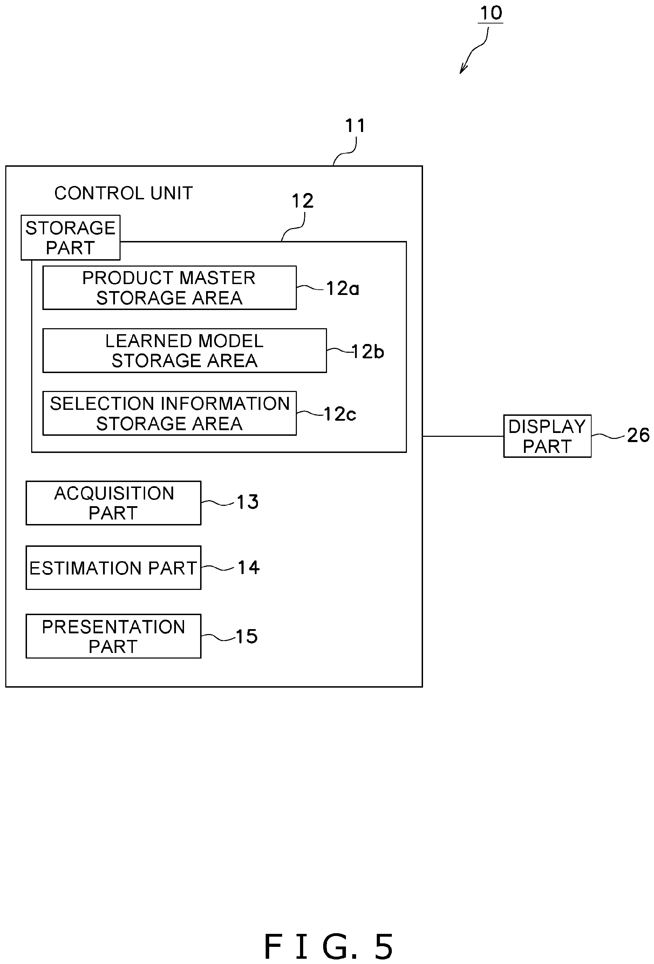

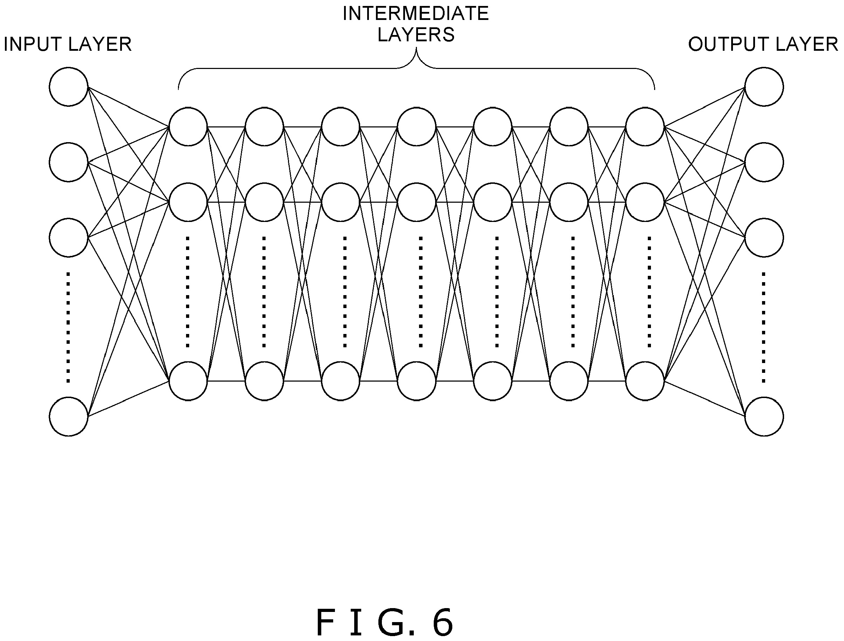

The product candidate presentation system 10 shall be described with reference to FIGS. 1 to 6. FIG. 5 is a block diagram of the product candidate presentation system 10. FIG. 6 conceptually represents a neural network of algorithms of the learned model in the storage part 12 of the control unit 11.

The product candidate presentation system 10 is provided with the control unit 11 described above and the display part 26, as shown in FIG. 5. The control unit 11 controls the display of the display part 26. The display part 26 of the present embodiment is incorporated in the price determination device 20. The control unit 11 and the display part 26 are separate members, but may be an integrated tablet terminal, etc.

The control unit 11 is realized by means of a computer. The control unit 11 is provided with a control computation device and a storage device. A processor, namely a CPU or a GPU, can be used for the control computation device. The control computation device reads out a program stored in the storage device and performs a predetermined image process and/or computation process in accordance with the program. Furthermore, in accordance with the program, the control computation device can write a computation result into the storage device and read out information stored in the storage device.

The control unit 11 includes the storage part 12, an acquisition part 13, an estimation part 14, and a presentation part 15.

### (3-1) Storage part

The storage part 12 has, as storage areas where a variety of information is stored, a product master storage area 12a, a learned model storage area 12b, and a selection information storage area 12c.

The product master storage area 12a stores the product master. The product master is similar to the product master stored in the storage part 30 of the price determination device 20. However, it is preferred that the product master stored in the storage part 30 be constantly updated to the newest product master obtained from the store computer 100 in order to be used in the payment processing described above. The product master stored in the product master storage area 12a is used for the product estimation result obtained according to a learned model, described hereinafter, and the product master stored in the product master storage area 12a may therefore be the product master stored in the learned model storage area 12b at the time point when learning is performed by the learned model. Specifically, as sold products are added or discontinued, there may be inconsistencies in the content of the product master between the storage part 30 and the product master storage area 12a.

The learned model storage area 12b stores the learned model. The learned model is a model generated by mechanical learning. The learned model is acquired via a storage medium, a network, etc.

The selection information storage area 12c stores products selected from the product group in the past as selection information. The product group is a collection of products sold or provided in the store, etc. The selection information is rankings given to products that are candidates on the basis of products selected from the product group in the past (already selected results).

Specifically, referring to FIGS. 1 and 2, the control unit 27 of the price determination device 20 transmits the product selected using the selection part 29 to the store computer 100 via the network NW. The store computer 100 collects the information of products selected from stores and generates products selected from the product group in the past as selection information. The store computer 100 transmits the selection information thus generated to the control unit 11 via the network NW. The store computer 100 transmits the selection information at a predetermined timing. The store computer 100 may transmit the selection information in accordance with a transmission request from the control unit 11. The control unit 11 stores the received selection information in the selection information storage area 12c of the storage part 12. The control unit 11 may store the received selection information in a cloud server.

The selection information of the present embodiment is information pertaining to a number of corrections counted by associating the selection of each product as a correction action for products selected exclusive of the first candidate group, described hereinafter, among the products selected from the product group in the past.

Specifically, when the product selected using the selection part 29 is included in the first candidate group, the number of corrections is not counted up on the assumption that there was no correction action. When the product selected using the selection part 29 is not included in the first candidate group, the number of corrections is counted up on the assumption that there was a correction action. The number of corrections thus counted is recorded for each product, and selection information is generated. In this embodiment, the selection information has the products aligned in descending order of number of corrections.

The selection information has the products aligned in descending order of number of corrections, the total number being no greater than a predetermined number from the most recent correction or the time of correction being within a predetermined time period from the most recent correction. A case in which a number of corrections no greater than a total of 100 (times) from the most recent correction (a number of corrections having a total no greater than a predetermined number from the most recent correction) is utilized as the selection information is described as an example. In this case, the selection information storage area 12c stores the number of corrections for each product in a manner such that it is possible to identify whether or not the total of the number of corrections (total number) made to all products represents corrections from the most recent correction to the 100^{th} correction. In detail, the selection information storage area 12c is configured so as to, for each product, store a period in which corrections were made together with the record of the corrections, or to store an order (sequence) in which the corrections were performed together with the record of the corrections while updating the order each time. The selection information is generated by aligning the products in descending order of number of corrections. The predetermined number may be changed as appropriate to a suitable value in accordance with the result of applying a payment process in which a product selection is made in a display of a second candidate group, and the predetermined number is not limited to 100 times. For example, the predetermined number may be fewer than 100 times (e.g., 50 times) or greater than 100 times (e.g., 1000 times).

For example, selection information may be generated by aligning products in descending order of number of corrections within a predetermined number of days from the most recent correction. The predetermined number of days is a number of days set, as appropriate, considering a frequency of additions to (rate of increase in) corrections pertaining to the products; for example, the number of days is set to 2-30. In this case, the selection information storage area 12c is configured so as to store the number of corrections for each product in a manner such that it is possible to identify the period in which corrections to all products were made. In detail, the selection information storage area 12c is configured so as to store, for each product, the period in which corrections were made, together with a record of the corrections.

Other than when the product candidate presentation system 10 first begins to be used, the counting of the number of corrections may be started at a predetermined timing. For example, the counting of the number of corrections is started during (at the time of) an update of the learned model, described hereinafter. That is, the counting of the number of corrections is started based on a timing of (triggered by) an update of the learned model. Specifically, the selection information storage area 12c may reset the numbers of corrections of the products (or update the numbers to 0) during ("based on a timing of" or "triggered by" an update of the learned model. This is because generally, when the learned model is updated, products of which an estimate is likely to be mistaken can change, and a correction relating to an estimate of a learned model before an update therefore does not reflect the actual situation.

### (3-2) Acquisition part

The acquisition part 13 acquires the image I of the product 200. The image I of the product 200 may be an image captured by the imaging part 22, or may be an image of a product extracted from an image captured by the imaging part 22. The image I of the product 200 may be the result of image processing (e.g., a revision bringing a luminance value of the captured image into conformity with a luminance value of an image learned by the learned model) performed on an image captured by the imaging part 22. In this embodiment, the acquisition part 13 acquires an image I transmitted from the price determination device 20 via the network NW.

### (3-3) Estimation part

The estimation part 14 estimates product candidates from the product group on the basis of the image I. The estimation part 14 acquires the image I utilized to estimate the product 200 from the acquisition part 13.

In the present embodiment, the estimation part 14 estimates product candidates in accordance with the learned model. The learned model predicts, through mechanical learning, the product that the image based on the image data will show, and outputs this product. The learned model includes a neural network. The learned model may include a convolutional neural network. Furthermore, the learned model may include a neural network of a plurality of layers (e.g., 8 or more). Specifically, the learned model may be generated by deep learning.

The neural network is configured from, for example, an input layer, numerous intermediate layers (hidden layers), and an output layer, as shown in FIG. 6. From the input layer, input values x (= *x*₀*, x*₁, *x*₂, ... *x*ₚ) having *p* parameters as elements are outputted unchanged to the intermediate layers. Each of the intermediate layers converts the total input to output through an activation function and sends the output to the next layer. In the output layer, the total input is converted through an activation function to an output vector *y* (= *y*₀, *y*₁, ... *y*_{q}) of the neural network having *q* parameters as elements. The vectors y each express a possibility of the product being a product *S*ᵢ as a numerical value, and a vector is outputted for each product *S*ᵢ. The variable *i* is a value for identification appended to each product, and is associated with any of the values 1-q from the number of parameter elements determined on the basis of the total number of (types of) products.

In this embodiment, the neural network receives, as an input, a pixel value of each pixel of the image and outputs information (output vector y) indicating the estimation result for the product. The input layer of the neural network is provided with neurons proportional to the number of pixels in the image. The output layer of the neural network is provided with neurons for outputting information relating to the estimation result for the product. The product can be estimated on the basis of output values of the neurons of the output layer. The output value of each neuron is, for example, a value of 0-1. In this case, a greater neuron value (a value closer to 1) indicates a higher possibility of the product being the product in the image, and a lesser neuron value (a value closer to 0) indicates a lower possibility of the product being the product in the image. Specifically, when the neuron values for the product *S*ᵢ (*y*ᵢ or values outputted on the basis of y) are greater, the probability of the product in the image being the product *S*ᵢ is high, and when the neuron values for the product *S*ᵢ are less, the probability of the product in the image being the product *S*ᵢ is low.

The estimation part 14 inputs the image I to the learned model. The estimation part 14 may normalize the image to be inputted. Image normalization is performed by, for example, image shrinking, enlarging, trimming, etc. The estimation part 14 may perform a contrast adjustment, color change, format change, or other various processes on the inputted image. The estimation part 14 acquires an estimation result, which includes the output values outputted from the neural network, in accordance with the input of the image to the neural network of the learned model. The estimation result includes all types of products registered in the product master.

The estimation part 14 assigns rankings to the candidate products on the basis of the estimation result. Specifically, for each product that could be a candidate, the estimation part 14 calculates a likelihood of the product (probability of estimation of the product being each individual product, based on the neuron values described above) estimated from the image I. Specifically, the estimation part 14 assigns rankings in order beginning with products having the greatest neuron values. The estimation part 14 generates estimation information correlating the product number and the ranking for all products. The estimation part 14 transmits the image information and estimation information for the image used in the estimation process to the presentation part 15.

### (3-4) Presentation part

The presentation part 15 sorts candidates for the product estimated by the estimation part 14 (products that, among the products estimated by the estimation part 14, are ranked up to a predetermined ranking beginning with products having a high likelihood) as a first candidate group, sorts candidates for the product (products that, among the products not sorted as candidates by the estimation part 14, are ranked up to a predetermined ranking beginning with products having a high number of corrections) on the basis of the selection information as a second candidate group, and presents the first candidate group and the second candidate group. The first candidate group and the second candidate group are configured from products included in the product master, and these groups do not include any overlap of the same products. The first candidate group and the second candidate group are each configured from one or more products. The candidates for the product presented by the presentation part 15 are displayed on the display part 26.

The first candidate group of the present embodiment are determined on the basis of the ranking given to the candidate products, which is given on the basis of the result (likelihood) estimated by the estimation part 14 (learned model) from the image I. The first candidate group is products up to a predetermined ranking, aligned in descending order of ranking, within the rankings of products estimated by the estimation part 14. Specifically, the first candidate group is an extraction of products up to *k*^{th} (no.), which is the predetermined ranking, in descending order of probability of the estimation outputted by the learned model. In detail, among products *S*ᵢ ranked as 1^{st} (no.), 2^{nd} (no.), ..., *q*^{th} (no.), the 1^{st} (no.) to *k*^{th} (no.) products *S*ᵢ are extracted from those having a high neuron value *y*ᵢ corresponding to the products *S*ᵢ outputted by the learned model.

The second candidate group of the present embodiment is determined on the basis of products aligned in descending order of number of corrections, with the exception of the products sorted in the first candidate group, within the selection information. Specifically, the second candidate group is products that, among the products of the product master, are aligned in descending order of number of corrections, with the exception of the products sorted in the first candidate group. In other words, the second candidate group is an extraction of the remaining products excluded from the first candidate group and aligned in descending order of number of corrections. Therefore, as described above, the first candidate group and the second candidate group do not contain overlap of the same products.

In this embodiment, the presentation part 15 presents the second candidate group in alignment of ranking below the first candidate group. In this case, the display part 26 displays an alignment of a predetermined number (counting) of products in descending order of likelihood based on the estimation part 14, and below these products displays an alignment of products in descending order of number of corrections based on the selection information. There is a limit on the number of products that can be displayed simultaneously on the display part 26; therefore, as is described hereinafter, the second candidate group displayed on the first screen image of the display part 26 is limited by the presentation part 15 to a predetermined number of products in descending order of number of corrections. A second candidate group that could not be fully displayed on the first screen image of the display part 26 is displayed on a next and subsequent screen images displayed by (touching and) selecting a next-page button (area) (not shown) displayed on the display part 26.

The presentation part 15 presents at least some of the first candidate group and at least some of the second candidate group on the first screen image of the display part 26. Specifically, the presentation part 15 presents the first candidate group and the second candidate group so that the display part 26 can display the two groups simultaneously. In this embodiment, all of the first candidate group and the upper ranks of the second candidate group are displayed on the first screen image of the display part 26.

Specifically, the presentation part 15 designates 1^{st} to *k*^{th} (*k* being any integer) products, from among the ranking of products estimated by the estimation part 14, as the first candidate group as described above. The presentation part 15 reads the selection information out from the selection information storage area 12c, and from the selection information, designates ranked products, with the exception of products sorted in the first candidate group, as the second candidate group. Specifically, the presentation part 15 presents the products of the first candidate group (1^{st} to *k*^{th} products extracted in descending order of likelihood) as 1^{st} to *k*^{th} candidates, and presents products of the second candidate group (products extracted in descending order of number of corrections among products not included in the first candidate group) as (*k*+1)^{th} and subsequent candidates.

The presentation part 15 may present the products of the first candidate group and the products of the second candidate group on the display part 26 by displaying the two groups as being sectioned apart from each other. Additionally, the presentation part 15 may present the products of the first candidate group and the products of the second candidate group on the display part 26 by displaying the two groups so as to be visually different.

When the learned model performs an estimation on an image of products that can be estimated comparatively correctly (an image of products that are not difficult to estimate), the products estimated by the learned model have a high probability of being correct from products having a low likelihood to products of a specific ranking, but it is clear that products subsequent to the specific ranking have a low possibility of being correct. For example, when, for a certain product group, the candidates include products in order as products from an upper rank to the 1^{st} product, products up to the 2^{nd} product, ..., and products up to the 4^{th} product, the statistical probability of any product being correct improves and reaches about 80% whenever the number of products included in the candidates is increased, but even if 5^{th} and 6^{th} products are further added as candidates, the statistical probability of any product being correct does not improve by much beyond 80% (the probability is saturated). In this case, it is preferable that k be set to 4. When k is 4, on the first screen image of the display part 26 in FIG. 3, products *A*-*D* (four products) are nos. 1-4 of the candidates for the product estimated by the estimation part 14, and products *E*-*G* (determined from the number of products that can be displayed simultaneously; three products in this case) are nos. 1-3 of products excluding products *A*-*D* from the selection information. The products *A*-*D* are the first candidate group, and the products *E*-*G* are the second candidate group. In this case, the presentation part 15 may provide a borderline between product *D* and product *E*, and may present products *A*-*D* and products *E*-*G* in different colors. The 4^{th} and subsequent products excluding products *A*-*D* from the selection information are displayed on the next screen image of the display part 26. The value of *k* is a value that can change according to the estimated product group, and depending on the product group, is not limited to 4.

When the learned model performs an estimation on an image of a product that is likely to have a comparatively erroneous estimation (an image of a product that is difficult to estimate), there is a very low possibility that the correct product will be included in the upper (1^{st} to *k*^{th}) products based on the estimation of the learned model. The second candidate group, by contrast, includes products that have been corrected in the past and therefore includes products for which the estimation is likely to be erroneous. Therefore, in an image of a product that is likely to have a comparatively erroneous estimation, there is a high possibility that the correct product will be included in the second candidate group. Specifically, the first candidate group and the second candidate group have a supplemental relationship.

Thus, depending on the products included in the image I, there cannot be said to be a high probability that the products of the first candidate group will definitely be more correct than the products of the second candidate group. It is merely that products that are problematic for the learned model are generally a small proportion (at most, less than half) of all the products. Therefore, considering all of the products together, the statistical probability of the product being included in the first candidate group is higher than the statistical probability of the product being included in the second candidate group. Therefore, the products of the second candidate group are displayed below the products of the first candidate group, as described above.

### (3-5) Display part

The display part 26 has a screen that displays the first candidate group and the second candidate group presented by the presentation part 15. In this embodiment, the display part 26 is a display for the price determination device 20. Therefore, candidates of the product corresponding to the image I presented by the presentation part 15 are transmitted to the display part 26 of the price determination device 20 via the network NW.

The display part 26 has a screen. As described above, the display part 26 displays an alignment of candidate products in order from those of highest probability of being the correct product, on the basis of the output (presentation) of the presentation part 15, from the first screen image to the next screen image. In FIG. 3, the individual screen images display the image I of the product and the product candidates presented by the presentation part 15. A predetermined number of product candidates (e.g., four from the first candidate group and three from the second candidate group for a total of seven) corresponding to the image I are displayed in vertical alignment on the screen images of the display part 26 so that products of higher probability appear higher. Thus, the display part 26 is configured so that should the product candidates displayed on the first screen image by the presentation part 15 be not correct, the user will be able to select the correct product.

### (4) Product candidate presentation method and payment-processing method

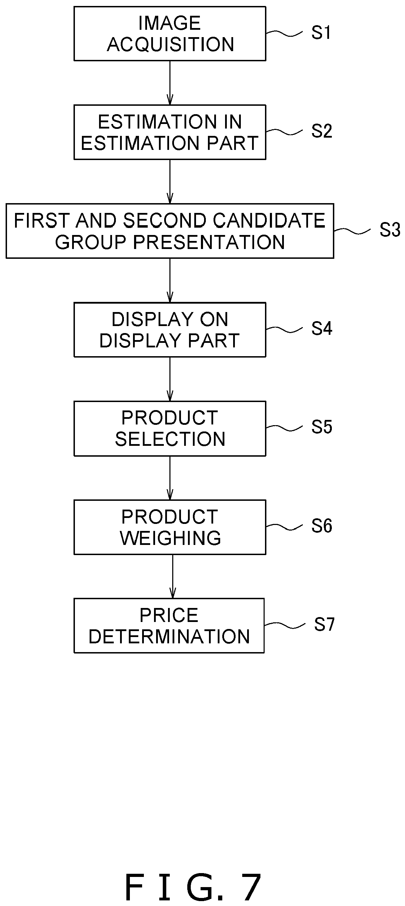

A product candidate presentation method and a payment-processing method shall be described with reference to FIGS. 1 to 7. FIG. 7 is a flowchart of a price processing method. The flowchart shown in FIG. 7 is merely one example of a process for determining the product price, and may be changed as appropriate within a range such that there are no contradictions. For example, the flowchart of FIG. 7 is not a limitation on step order, and the step order may be changed as appropriate within a range such that there are no contradictions.

The product candidate presentation method uses the product candidate presentation system 10 described above. The payment-processing method uses the payment-processing system 40 described above.

First, the acquisition part 13 acquires an image I of a product 200 (step S1). Step S1 is carried out, for example, as follows.

When the product 200 is placed on the weighing stand 24a, the control part 28 controls the imaging part 22 and causes the imaging part 22 to capture an image of the product 200. The control unit 27 of the price determination device 20 then transmits the image I to the control unit 11 of the product candidate presentation system 10 via the network NW. The acquisition part 13 acquires the transmitted image I.

Next, product candidates are estimated by the estimation part 14 from the product group on the basis of the image I (step S2). In this embodiment, the estimation part 14 assigns rankings to the candidate products on the basis of the result estimated from the image I, using a learned model obtained through mechanical learning.

Next, the presentation part 15 sorts candidates of the product estimated by the estimation part 14 as a first candidate group, sorts candidates of the product as a second candidate group on the basis of selection information, and presents the first candidate group and the second candidate group (step S3). Step S3 is carried out, for example, as follows.

Of the rankings of products estimated by the estimation part 14, the rankings 1-*k* (*k* being any integer) are sorted as the first candidate group. The presentation part 15 reads out the selection information from the storage part 12, and sorts, from the selection information, ranked products excluding those sorted in the first candidate group as the second candidate group. The 1^{st} to *k*^{th} candidates are designated as the 1^{st} to *k*^{th} products of the first candidate group, and the (*k*+1)^{th} and subsequent candidates are presented as products of the second candidate group, ordered according to highest ranking.

Next, the first candidate group and second candidate group presented by the presentation part 15 are displayed on the display part 26 (step S4). In step S4, the control unit 11 transmits the first candidate group and second candidate group presented by the presentation part 15 to the control unit 27 of the price determination device 20. The control unit 27 displays the product candidates on the display part 26 in order to allow the user to make a selection.

Next, through the selection part 29, a product is selected from among the candidates presented by the product candidate presentation system 10 (step S5). In this embodiment, the display part 26, which is a touch panel display, is operated and the selection part 29 is pressed where one product is depicted from the plurality of candidates of the product displayed on the display part 26. Steps S4 and S5 are carried out, for example, as follows.

On the first screen image of the display part 26, seven product candidates corresponding to the image I are displayed in vertical alignment so that candidates of higher probability appear higher, as in FIG. 3. The four upper products *A*-*D* are the first candidate group. The 5^{th}-7^{th} products *E*-*G* are the second candidate group. A user looking at this screen image operates the selection part 29 of the display part 26 and selects the correct product from among the products *A-G.* For example, the user selects the correct product by pressing the selection part 29 where the correct product is depicted.

The display part 26 is configured so that the user can select the correct product even when the estimations made by the estimation part 14 are all incorrect. In this embodiment, because the first candidate group and the second candidate group are displayed on the first screen image, the user confirms if the correct product is not among products *E-G* when the correct product is not among products *A*-*D*. When the correct product is not displayed on the first screen image of FIG. 3 in the display part 26, 8^{th}-14^{th} products are displayed on the next screen image. Thus, the user can bring up screen images in order until the screen image including the correct product appears. In this example, the display part 26 displays seven products on one screen image, but there is no limitation as to the number of products displayed on the screen image. Additionally, the number of products displayed on each screen image may be fixed or not fixed.

The result of the user's product selection is transmitted from the price determination device 20 to the control unit 11 via the network NW. The selection information described above is generated on the basis of this selection result. In detail, when the product selected by the user is not included in the first candidate group, it is assumed that a correction was made to the estimation of the estimation part 14, and the number of corrections is counted up by 1 for that product.

The weighing part 24 of the price determination device 20 weighs the product 200 placed on the weighing stand 24a (step S6). In step S6, the control unit 27 acquires a weight value of the product 200.

Next, on the basis of the product selected through the selection part 29 and the weight measured by the weighing part 24, the price of the product 200 is calculated (step S7). In step S7, the calculation part 31 performs a calculation multiplying the unit price of the product selected by the user in step S5 and read out from the storage part 30 (the unit price of the product transmitted from the store computer 100) and the weight value of the product 200 acquired in step S6, and determines the calculated value to be the price of the product 200. Lastly, the price of the product 200 determined in step S7 is displayed on the display part 26 along with the weight value and unit price of the product 200, as shown in FIG. 4, by the control unit 27.

### (5) Characteristics

### (5-1)

The inventors discovered that within the rankings of products estimated by the estimation part 14 from a certain specific image, the probability of the correct product being included in rankings up to the 4^{th} ranking is at least 80%. This discovery relates to rankings of products estimated form a certain specific image, but the inventors have also discovered that there is a limit to the number of products in which the correct product would be included with a high probability. From this discovery, the inventors have conceived that the probability of the correct product being included is low even if products other than the upper products are estimated by the estimation part 14 and presented as candidates, and product candidates are therefore presented on the basis of products selected in the past instead of low-probability products. Specifically, the technical idea relating to the present embodiment was completed with the concept to present both a first candidate group including products having a high probability of being correct, this group being obtained from the result of an estimation of upper ranks made by the estimation part 14, and a second candidate group obtained from selection information pertaining to products selected in the past.

Specifically, the product candidate presentation system 10 of the present embodiment is a product candidate presentation system that presents product candidates in order to allow a user to make a selection, on the basis of a captured image I of a product. The product candidate presentation system 10 is provided with the acquisition part 13, the estimation part 14, the storage part 12, and the presentation part 15. The acquisition part 13 acquires an image I of the product. The estimation part 14 estimates product candidates from the product group on the basis of the image I. The selection information storage area 12c of the storage part 12 stores products selected from the product group in the past as selection information. The presentation part 15 sorts product candidates estimated by the estimation part 14 as a first candidate group, sorts product candidates as a second candidate group on the basis of the selection information, and presents a first candidate group and a second candidate group.

In the product candidate presentation system 10 of the present embodiment, the presentation part 15 can present the first candidate group, which is sorted on the basis of the image I, and the second candidate group, which is sorted on the basis of products selected in the past. Therefore, the possibility of the correct product being included in the upper ranks can be higher than when only the first candidate group chosen on the basis of the image I is presented. It is thereby possible to reduce the problem of it not being possible to make a suitable product selection based on the estimation result from the estimation part 14, by presenting a second candidate group while utilizing the estimation result. Therefore, the product candidate presentation system 10 according to a first aspect can reduce the effort needed to select a product.

### (5-2)

In the product candidate presentation system 10 of the present embodiment, the selection information is information pertaining to a number of corrections counted by associating the selection of each product as a correction action for products selected exclusive of the first candidate group among the products selected from the product group in the past.

Here, as the selection information, products that were not selected from the first candidate group sorted on the basis of the image I are counted as the number of corrections. Therefore, the selection information is associated with a correction action performed due to a product not being included in the first candidate group. Therefore, even if the product is not included in the first candidate group, the product will be included in the upper ranks of the second candidate group, and the possibility of the correct product being included in the upper ranks is thereby even higher.

When there is a product such as a product that is difficult to correctly estimate from the image I despite accumulated learning or a new product that has not been learned (also referred to as a "product that is problematic for the estimation part 14" below), there is a lower probability of the correct product candidate being included in the first candidate group estimated by the estimation part 14. However, such a product that is problematic for the estimation part 14 is often selected exclusive of the first candidate group and is therefore counted as the number of corrections. Therefore, a product that is problematic for the estimation part 14 can be supplemented by sorting and presenting products having a high number of corrections as the second candidate group. When there is no match between a product that is problematic for the estimation part 14 and often-sold products, the product that is problematic for the estimation part 14 can be effectively supplemented.

### (5-3)

In the product candidate presentation system 10 of the present embodiment, the estimation part 14 estimates product candidates according to a learned model. The number of corrections is reset during an update of the learned model. Here, the number of corrections is reset based on a timing of (triggered by) an update of the learned model.

During an update of the learned model, the counting of the number of corrections can be started. Therefore, a second candidate group reflecting the actual situation can be presented because selection information is created along with an update of the learned model.

### (5-4)

In the product candidate presentation system 10 of the present embodiment, the presentation part 15 presents the second candidate group in alignment below the first candidate group.

With this configuration, products can be presented in descending order of possibility (probability) of being the correct product. Therefore, the effort needed to select a product can be further reduced.

### (5-5)

The product candidate presentation system 10 of the present embodiment is further provided with the display part 26, which has a screen that displays the first candidate group and the second candidate group presented by the presentation part 15. The presentation part 15 presents at least some of the first candidate group and at least some of the second candidate group on the first screen image of the display part 26.

With this configuration, the first candidate group and the second candidate group are displayed on the first screen image in the display part 26. The possibility (probability) of the correct product being included on the first screen image thereby increases, and the user can therefore be spared the effort of bringing up the next screen image.

### (5-6)

In the product candidate presentation system 10 of the present embodiment, the estimation part 14 assigns rankings to candidate products according to a learned model, on the basis of the result estimated from the image. The presentation part 15 presents products up to a predetermined ranking, in descending order of ranking, as the first candidate group.

With this configuration, when the learned model is utilized to assign rankings and estimate product candidates from the image I, there is a high probability of the correct product being included in the upper ranks. The presentation part 15 then presents the upper-ranked estimation results in the estimation part 14 in descending order of ranking as the first candidate group, and as the second candidate group, presents products selected in the past on the basis of the selection information. Therefore, the possibility of the correct product being included in the upper ranks is even higher.

### (5-7)

The payment-processing system 40 of the present embodiment is provided with the imaging part 22, the product candidate presentation system 10, the selection part 29, the weighing part 24, and the calculation part 31. The imaging part 22 captures an image of the product. The product candidate presentation system 10 presents product candidates on the basis of the image I of the product captured by the imaging part 22. The selection part 29 is used to select a product from among the candidates presented by the product candidate presentation system 10. The weighing part 24 weighs the product. The calculation part 31 calculates the price of the product on the basis of the product selected using the selection part 29 and the weight measured by the weighing part 24.

Because the payment-processing system 40 of the present embodiment is provided with the product candidate presentation system 10 described above, the effort of selecting the product in the captured image can be reduced. Therefore, payment can be made efficiently.

### (6) Modifications

Modifications of the embodiment described above are presented below. Some or all of the details of the modifications may be combined with the contents of other modifications in a range such that the contents do not contradict each other.

### (6-1) Modification A

In the embodiment described above, the selection information is an alignment of products in descending order of number of corrections, but this example is not provided by way of limitation. In the present modification, the selection information is a recording of the number of corrections for each product. For example, for the selection information, the numbers of corrections of individual products are recorded in a table in which products are aligned with no relation to the number of corrections. The selection information may be flagged.

In the present modification, the presentation part 15 sorts products in descending order of number of corrections serving as a correction action, on the basis of the selection information. The presentation part 15 also sorts products in descending order of number of corrections with a total number no greater than a predetermined number, or within a predetermined time period from the most recent correction. For example, from the selection information, the presentation part 15 aligns products in descending order of number of corrections with the total number of corrections from the most recent correction being 100, and sorts, as the second candidate group, a group of products excluding those sorted in the first candidate group.

Thus, in the product candidate presentation system of the present modification, the presentation part 15 sorts products in descending order of number of corrections serving as a correction action on the basis of the selection information.

In this modification, products sorted in descending order of number of corrections can be presented as the second candidate group by the presentation part 15. Products not readily sorted as the first candidate group are thereby readily included in the upper ranks of the second candidate group.

Additionally, in the product presentation system of the present modification, the presentation part 15 sorts products in descending order of number of corrections serving as a correction action on the basis of selection information pertaining to a number of corrections counted by associating the selection of each product as a correction action. It is therefore possible to reduce the effort of realigning products in descending order of number of corrections every time the number of corrections increases.

In the product candidate presentation system, the presentation part 15 sorts products in descending order of number of corrections with the total number being no greater than a predetermined number from the most recent correction, or within a predetermined time period from the most recent correction.

In this modification, the presentation part 15 sorts products using the most recent number of corrections in the selection information. For example, when the product group includes a long-selling product having a low correction frequency and a new product having a high correction frequency, there is a bias in the number of corrections, but the presentation part 15 sorts the new product having a high correction frequency to an upper rank as part of the second candidate group. Therefore, the presentation part 15 can present a second candidate group reflecting the actual situation.

### (6-2) Modification B

In the embodiment described above, the selection information is information pertaining to the number of corrections counted by associating products selected exclusive of the first candidate group as a correction action, but this example is not provided by way of limitation. In the present modification, when a product below a predetermined ranking in the rankings estimated by the estimation part 14 is selected, the number of corrections of that product is counted up. The predetermined ranking can be set to any ranking, e.g., to 5^{th}. In this case, when a product at or below the 5^{th} ranking estimated by the estimation part 14 is selected, the product is assumed to have had a correction in the estimation in the estimation part 14, and the number of corrections is counted up. When a product at or above the 4^{th} ranking estimated by the estimation part 14 is selected, the product is assumed to have not had a correction in the estimation in the estimation part 14, and the number of corrections is not counted up. Selection information can be generated by aligning products in descending order of number of corrections counted in this manner.

### (6-3) Modification C

In the embodiment described above, the selection information is information pertaining to a number of corrections counted by associating the selection of each product as a correction action for products selected exclusive of the first candidate group among the products selected from the product group in the past, but this example is not provided by way of limitation. In the present modification, the selection information pertains to a number of selections counted by associating the selection of each product as a selection action for all selected products among the products selected from the product group in the past.

Specifically, the selection information is an alignment of products in descending order of number of selections serving as the selection action. In other words, the selection information is an alignment in descending order of number of sales in the product group. The selection information is an alignment of products in descending order of number of selections with the total number being no greater than a predetermined number from the most recent selection, or within a predetermined time period from the most recent selection.

As an alternative for the selection information, the number of selections serving as the selection action is recorded for each product. For example, for the selection information, the numbers of selection of the individual products are recorded in a table in which the products are aligned with no relation to the number of selections. In this case, the presentation part 15 sorts products in descending order of number of selections serving as the selection action, on the basis of the selection information. Additionally, the presentation part 15 sorts products in descending order of number of selections with the total number being no greater than a predetermined number from the most recent selection, or within a predetermined time period from the most recent selection.

In the present modification, products sorted on the basis of the selection information, in which often selected products are aligned, can be presented as the second candidate group. Therefore, even if a product is not included in the first candidate group, the product will be included in the upper ranks of the second candidate group, whereby there is a higher possibility of the correct product or a frequently selected product being included in the upper ranks.

For example, when a new product that has not been learned is selling well, a product that is problematic for the estimation part 14 can be supplemented by the second candidate group. Additionally, at least, the second candidate group makes it possible for well-selling products that are frequently selected to be displayed on the first screen image. Therefore, even if the products in the first candidate group based on the estimation of the learned model do not include the correct product, it is less likely that a worker will transition to the next screen image and the correct product will be sorted, as compared to cases of supplementing products that are not selling well. Therefore, the burden on the worker is reduced.

### (6-4) Modification D

In the embodiment described above, the presentation part 15 presents the second candidate group aligned below the first candidate group, but this example is not provided by way of limitation. The presentation part 15 preferably presents both the first candidate group and the second candidate group. In the present modification, the presentation part 15 presents the products of the first candidate group and the products of the second candidate group in alignment with each other.

### (6-5) Modification E

In the embodiment described above, the first candidate group is the 1^{st} to *k*^{th} (*k* being any integer) products in the rankings of the products estimated by the estimation part 14, but the first candidate group does not need to be set apart according to the number of products. In the present modification, the first candidate group is products having a neuron value at or above a threshold value. Therefore, the number of products in the first candidate group differs depending on the neuron vales in the estimation part.

### (6-6) Modification F

In the embodiment described above, the estimation part 14 utilizes a learned model to estimate the product corresponding to the image I, but this example is not provided by way of limitation. The estimation part 14 may estimate the product from the image I using a rule base, without utilizing a learned model. For example, in the control part 11, the relationship between the image and the product may be described in advance by a program, and the estimation part 14 may estimate the product corresponding to the image I on the basis of this program.

### (6-7) Modification G

In the embodiment described above, the product candidate presentation system 10 is configured to be capable of communicating with the store computer 100 via the network NW, but the store computer 100 may be omitted.

Additionally, in the embodiment described above, the control unit 11 of the product candidate presentation system 10 is configured so as to acquire the selection information, which is products selected from the product group in the past, from the store computer 100, but this example is not provided by way of limitation. In the present modification, the control unit 11 is configured so as to acquire the selection information from the price determination device 20.

Specifically, the control unit 27 of the price determination device 20 transmits the product selected using the selection part 29 to the control unit 11 of the product candidate presentation system 10 via the network NW. The storage part 12 of the product candidate presentation system 10 stores products selected from the product group in the past as the selection information. The price determination device 20 transmits the selection information at a predetermined timing. Additionally, the price determination device 20 may transmit the selection information in accordance with a transmission request from the control unit 11.

Thus, the product candidate presentation system of the present modification presents product candidates on the basis of information selected in the store where the payment-processing system 40 is located.

### (6-8) Modification H

In the embodiment described above, the estimation part 14 estimates product candidates from all product groups registered in the product master, on the basis of the captured image of the product. The product groups include products that are not handled due to shortages and other reasons. In the present modification, the estimation part estimates product candidates from a product group not including products that are not handled (a product group composed of products that are handled), on the basis of the captured image I of the product.

Specifically, the product master storage area 12a stores the product master, which is a collection of products that are handled. The phrase "products that are handled" means products that are sold/provided, in-stock products, etc., in, inter alia, the store where the product candidate presentation system 10 is used during the operation of the product candidate presentation system 10. Products that are sold/provided are, more specifically, products managed in stores as being sold/provided. Additionally, an in-stock product is, more specifically, a product that is managed as being in stock.

For example, the store computer 100 is configured so as to transmit information pertaining to whether or not individual products are handled (also referred to as "handled product information" below) to the control unit 11 via the network NW. The handled product information is, in short, information pertaining to products that are handled and products that are not handled. The store computer 100 transmits the handled product information at a predetermined timing. Additionally, the store computer 100 may transmit the handled product information in accordance with a transmission request from the control unit 11. The control unit 11 rewrites the product master stored in the product master storage area 12a of the storage part 12 on the basis of this information transmitted from the price determination device 20.

The handled product information may be transmitted to the control unit 11 from the price determination device 20 rather than the store computer 100. For example, a clerk, etc., of a supermarket or another store inputs a product to be handled (sold/provided) on that day into the price determination device 20, using the display part 26, which is a touch panel display, or another input device. Additionally, for example, a clerk, etc., inputs an out-of-stock product to the price determination device 20 using the display part 26 or another input device, as appropriate. The price determination device 20 transmits this inputted information to the control unit 11. On the basis of this information transmitted from the price determination device 20, the control unit 11 rewrites the product master stored in the product master storage area 12a of the storage part 12.

When the contents of the product master are inconsistent between the storage part 30 and the product master storage area 12a due to the addition or abolition of the products for sale, the estimation part 14 may be configured so as to acquire a product master that is stored in the storage part 30 and is a collection of products that are handled (different from the product master of the product master storage area 12a). With the product candidate presentation system and the payment-processing system of the present modification, there is less of a possibility that a product that is not handled will be estimated by the estimation part 14 as the product corresponding to the image I. Therefore, the possibility of the correct product being included in the first candidate group can be improved because the product can be accurately estimated from the image I by the estimation part.

### (6-9) Modification I

In the embodiment described above, the payment-processing system 40 weighs the product 200 and determines the price of the product 200 by multiplying the unit price of the product 200 by the weight of the product 200, but this example is not provided by way of limitation. The price determination device of the payment-processing system need not have a function for weighing the product 200. The payment-processing system of the present modification determines the price of the product 200 on the basis of the selection result for the product 200 and information on the price of the product acquired from the store computer 100.

### REFERENCE SIGNS LIST

- 10: Product candidate presentation system
- 12: Storage part
- 13: Acquisition part
- 14: Estimation part
- 15: Presentation part
- 20: Price determination device
- 22: Imaging part
- 24: Weighing part
- 26: Display part
- 29: Selection part
- 31: Calculation part
- 40: Payment-processing system
- 200: Product
- I: Image

### CITATION LIST

### PATENT LITERATURE

<Patent Literature 1> Japanese Patent No. 6177068

## Claims

1. A product candidate presentation system for presenting candidates of a product and receiving a selection of one of the candidates of the product on the basis of a captured image of the product, wherein the product candidate presentation system comprises:
an acquisition part configured to acquire the image of the product;
an estimation part configured to estimate candidates of the product from a product group on the basis of the image;
a storage part configured to store products selected from the product group in the past as selection information; and
a presentation part configured to sort candidates of the product estimated by the estimation part as a first candidate group, sort candidates of the product as a second candidate group on the basis of the selection information, and present the first candidate group and the second candidate group.

2. The product candidate presentation system according to claim 1, wherein
the selection information is information pertaining to a number of corrections counted by associating the selection of each product as a correction action for products selected exclusive of the first candidate group among the products selected from the product group in the past.

3. The product candidate presentation system according to claim 2, wherein
the presentation part is further configured to sort the products in descending order of number of corrections serving as the correction action on the basis of the selection information.

4. The product candidate presentation system according to claim 3, wherein
the presentation part is further configured to sort products in descending order of number of corrections with a total number being no greater than a predetermined number from the most recent correction or within a predetermined time period from the most recent correction.

5. The product candidate presentation system according to claim 3 or 4, wherein
the estimation part is further configured to estimate candidates of the product in accordance with a learned model, and
the number of corrections is reset during an update of the learned model.

6. The product candidate presentation system according to claim 1, wherein
the selection information is information pertaining to a number of selections counted by associating the selection of each product as a selection action for all selected products among the products selected from the product group in the past.

7. The product candidate presentation system according to any one of claims 1 to 6, wherein
the presentation part is further configured to present the second candidate group in alignment below the first candidate group.

8. The product candidate presentation system according to any one of claims 1 to 7, wherein
the system further comprises a display part having a screen that displays the first candidate group and the second candidate group presented by the presentation part, and
the presentation part is configured to output at least one of the first candidate group and at least one of the second candidate group on a first screen image of the display part.

9. The product candidate presentation system according to any one of claims 1 to 8, wherein
the estimation part is configured to assign rankings to the candidate products on the basis of a result estimated from the image in accordance with a learned model, and
the presentation part is configured to present products up to a predetermined ranking in descending order of ranking as the first candidate group.

10. A payment-processing system comprising:
an imaging part configured to capture an image of the product;
the product candidate presentation system according to any one of claims 1 to 9, which is configured to present candidates of the product on the basis of the image of the product captured by the imaging part;
a selection part configured to receive a selection of one of the candidates presented by the product candidate presentation system;
a weighing part configured to weigh the product; and
a calculation part configured to calculate a price of the product on the basis of the product selected using the selection part and the weight measured by the weighing part.
